# EUROPEAN PATENT SPECIFICATION

(11) **EP 1 368 703 B1**
(45) Date of publication and mention of the grant of the patent: **18.08.2004**
(21) Application number: 01915908.6
(22) Date of filing: 16.03.2001
(51) Int. Cl.: G03B 11/04, H04N 5/65

(54) **CAMERA LENS SHADING DEVICE**
GEGENLICHTBLENDE FÜR KAMERA
DISPOSITIF PARASOLEIL POUR CAMERA

(43) Date of publication of application: 10.12.2003
(73) Proprietor: Vocas B.V., 1200 AD Hilversum (NL)
(72) Inventor: BLOK, Fred, NL-1200 AD Hilversum (NL); LADRU, Bastiaan, NL-1200 AD Hilversum (NL)
(74) Representative: van Westenbrugge, Andries
(86) International application number: PCT/NL2001/000194
(87) International publication number: WO 2002/075447

(56) References cited:
- US-A- 4 137 540
- US-A- 4 381 890
- US-A- 4 443 061
- US-A- 4 863 242
- US-A- 5 528 424

## Description

The present invention relates to a camera lens shading device comprising a shell, the shell having mounting means for mounting the shell on a camera, the shell having a substantially concave inner surface with an opening for passing light to a camera lens, and a first axis of symmetry.

American patent US-A-5,528,424 discloses a lens shading device having shade pieces of opaque, flexible, plastic sheet material. A top shade piece extends outwards from above the camera lens and is adjustable over a range of angles in order to block stray light from falling on the front surface of the camera lens. A number of further shade pieces are present to block stray light from other angles or to obtain a desired shading effect.

American patent US-A-4,137,540 discloses a matte box for mounting on a camera and serving as a lens shade and as a support for filters, special effects, masks and the like. The lens shade is formed by a shell mountable to a camera lens, which also comprises one or more trays for carrying the various filters and masks.

With the known shading devices for camera lenses, the shading blades are mounted as external accessories. This hampers the freedom of movement of the camera, as it is easy to hit persons or objects in the vicinity of the camera with the often thin and sharp shading blades.

The present invention aims to provide a camera lens shading device which does not have the mentioned disadvantages.

According to the present invention, a camera lens shading device according to claim 1 is provided, in which the shell comprises at least a first shade element positioned at the inside of the shell, of which a first edge is pivotally mounted next to an opening for passing light to a camera lens, the first edge being substantially parallel to the first axis of symmetry.

The internally mounted first shade element, which may be made of non-reflecting material, allows to screen of a part of the camera lens for stray light, thereby blocking the stray light from entering the lens optics, and thus providing an enhanced image quality. As the first shading blade is mounted internally, no large external parts are present which may form a danger for persons or objects in the vicinity of the camera. As the first shade blade is pivotally mounted, the amount of screening off of the camera lens may be adjusted. When the first shade blade is mounted horizontally in the upper part of the shell, it may be used to screen off stray light, e.g. sun light.

In an embodiment of the present camera lens shading device, the shading device further comprises a second shade element positioned at the inside of the shell, having substantially identical dimensions as the first shade element, a first edge of the second shade element being mounted next to the opening opposite to the first shade element. This embodiment also allows to screen off stray light from the opposite directions. The second shade blade may then, e.g. screen off reflections from sun light in water.

In a further embodiment, the shading device further comprises first coupling means for coupling the movement of the first and second shade element in an opposite direction. It is then possible to move both the first and second shade blade simultaneously by only operating one of the shade blades.

In an even further embodiment of the present camera lens shading device, the first coupling means are arranged to'receive zoom or aspect ratio information and to control the relative position of the first and second shade element in dependence of the zoom or aspect ratio information. The zoom and/or aspect ratio information may be input manually, or may be received from the camera or camera lens, e.g. by means of a data link.

In a further developed embodiment, the camera lens shading device has a second axis of symmetry, substantially perpendicular to the first axis of symmetry, and the shading device further comprises at least one third shade element, being mounted at the inside of the shell next to the opening, substantially parallel to the second axis of symmetry. In this embodiment, it is possible to screen off stray light originating from all angles around a camera lens. When the first and second shade blades are horizontally mounted, the third shade blade(s) are mounted vertically.

Preferably, the shading device further comprises second coupling means for coupling the movement of the at least one third shade element in an opposite direction. This allows multiple third shade elements to be adjusted synchronously.

As in the embodiment described above, the second coupling means may be arranged to receive zoom or aspect ratio information and to control the relative position of at least one third shade element in dependence of the zoom or aspect ratio information.

Preferably, the shading device further comprises third coupling means for establishing a coupling between the first and second coupling means. This allows to operate all shade blades synchronously, thereby maintaining a certain chosen mutual position of the shade blades, or changing the mutual position of the shade blades, e.g. when changing the aspect ratio of the image formed by the camera lens.

In an even further embodiment, the shading device further comprises light mounting means at an outside edge of the shell. This allows to mount a light source as close as possible to a camera subject, which is advantageous in numerous camera work. By mounting the light source on the outside edge of the shell of the camera lens shading device, the light of the light source is not being blocked by any of the internally mounted shade blades.

The camera lens shading device according to a further embodiment may further comprise at least one tray for holding a filter or mask. Such an arrangement is also known in the art as a matte box, combining a number of functions for a camera lens in a single accessory.

The present invention will now be explained in further detail using an exemplary embodiment of the lens shade according to the present invention, with reference to the accompanying drawings, in which:
Fig. 1 shows an elevated frontal side view of an exemplary matte box according to the present invention;
Fig. 2 shows a front view of a further embodiment of the matte box according to the present invention; and
Fig. 3 shows a schematic diagram of a control circuit for the shade pieces of the matte box.

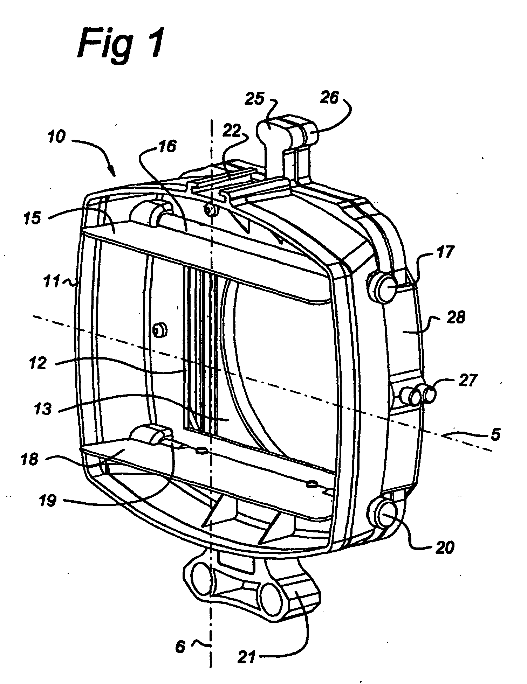

In Fig. 1, an elevated frontal side view is shown of a matte box 10 incorporating an exemplary embodiment of the camera shade device according to the present invention. The matte box 10 comprises a shell 11, which may be made of any suitable material such as plastic or aluminium, and is, at least at the inside facing a camera lens, provided with a non-reflective surface. The matte box 10 may be mounted in front of a camera lens using the mounting clamp 21. In general, Electronic News Gathering (ENG)/ Electronic Field Production (EFP) camera's are fitted with mounting rods, onto which accessories, such as the matte box 10, may be mounted using the mounting clamp 21.

The matte box 10 has a horizontal axis of symmetry 5 and a vertical axis of symmetry 6, which are both substantially perpendicular to the camera lens front surface to which the matte box 10 may be mounted, as indicated in Fig. 1.

The shell 11 is provided with a rectangular cut-out, indicated by the frame 12 in Fig. 1. The cut-out 12 provides a first shading function, in order to prevent stray light from entering a camera lens front surface portion, which is not used to form an image. In general, the form of the cut-out is fixed and corresponds to one of the image formats used by the camera (e.g. 16:9 or 4:3). The shell 11 also provides a shading function for the lens front surface, as the shell 11 protrudes to a certain extent from the camera lens front surface to which it is mounted. At the side of the camera lens, the matte box 10 is provided with an adaptation part 13, which provides a light-tight interface from the shell 11 to the front side of the camera lens. In general, this adaptation part 13 has a cylindrical end face matching the front side dimensions of generally used camera lenses.

Furthermore, the matte box 10 may be provided with a number of trays 25, 26 which are adapted to hold filters, masks and the like. The trays 25, 26 may be slidably mounted in a tray mounting part 28 of the matte box, and secured in the right position, e.g. using securing means 27, such as screws.

According to an embodiment of the present invention, the matte box 10 further comprises an upper horizontal shade blade 15 and a lower horizontal shade blade 18, of which the largest dimension extends in a direction substantially parallel to the horizontal axis of symmetry 5. The shade blades 15, 18 are pivotally mounted at the inside surface of the shell 11, e.g. using an upper and lower axis 16, 19, respectively, which are each secured to the shell 11 at two positions. The upper and lower axes 16, 19 are extended through the shell 11, such that the upper and lower horizontal shade blade 15, 18 may be adjusted using an upper and lower adjustment knob 17, 20, respectively. As the upper and lower adjustment knob 17, 20 are located at the outside of the shell 11, they are easily reachable and operable for the person operating the camera.

In a further, more simple embodiment, not shown in the Figures, the matte box 10 only comprises one horizontal shade blade, e.g. the upper horizontal shade blade 15 internally mounted in the shell 11. This still allows to screen off most sources of stray light (such as sun light) for a certain lens setting.

The upper and lower horizontal shade blades 15, 18 substantially extend over the total horizontal inside space of the shell 11. The side extremities of the upper and lower horizontal shade blades 15, 18 are adapted to substantially follow the inside surface of the shell 11 (or vice versa), such that no stray light can pass between the upper and lower horizontal shade blade 15, 18, respectively, and the inside surface of the shell 11. The width of the upper and lower horizontal shade blades 15, 18, i.e. the dimension extending outward from the camera lens front, is such, that a front side of the upper and lower horizontal shade blades 15, 18 only extends a little further than the front surface of the shell 11 when positioned perpendicular to the camera lens front surface. This can be seen in Fig. 1, which shows a side view of the matte box 10. This results in a camera lens shading device which has no large extending parts, and which is, therefore, very suitable for various camera work.

Using the upper and lower adjustment knob 17, 20, the operator of the camera may block stray light from entering the frontal surface of the camera lens. This enhances the contrast of the image formed by the camera lens, without having a lens shade blade on the outside of the matte box.

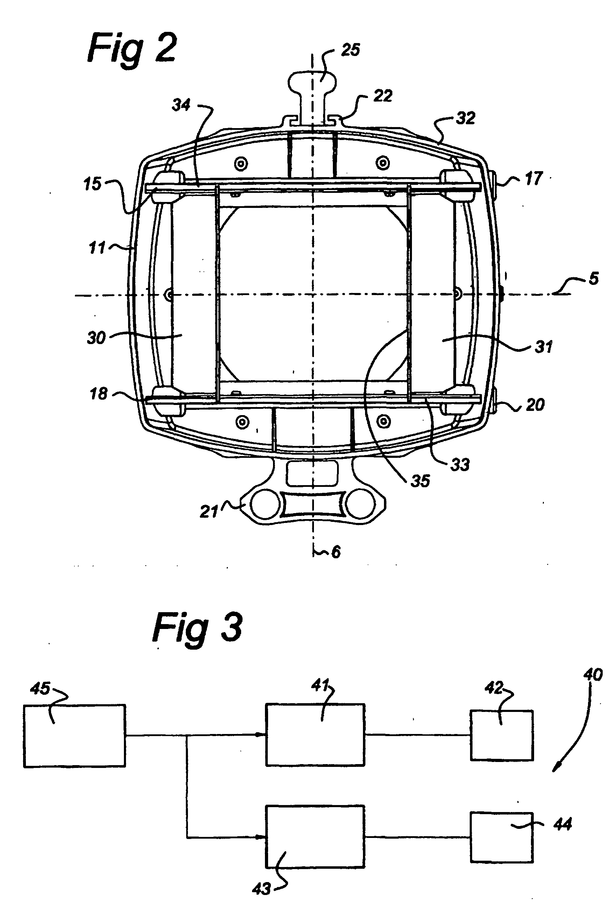

In a further embodiment, a horizontal shade blade coupling is provided between the upper and lower horizontal shade blades 15, 18, for simultaneous and opposite movement of the upper and lower horizontal shade blades 15, 18. E.g., when zooming in with the camera lens, a smaller part of the front surface of the camera lens is effectively used, and consequently, a larger part of the front surface of the camera lens may be screened of using the shade blades 15, 18 resulting in less stray light reaching the lens and thus providing an enhanced image quality. This may be accomplished by turning the upper adjustment knob 17 counter clock wise and the lower adjustment knob 20 clock wise, but it is more effective to e.g. couple the adjustment knobs 17,20. Of course, it is possible that the shade blade angular position is asymmetric, i.e. that the angle between the upper horizontal shade blade 15 with respect to the vertical in Fig. 1 is different from the angle between the lower horizontal shade blade 18 with respect to the vertical. The horizontal shade blade coupling will then maintain this asymmetry when zooming the camera lens. The horizontal shade blade coupling may be provided as a mechanical coupling, e.g. on the outside of the shell 11, or as an electronically controlled coupling. The electronically controlled coupling will be discussed in more detail below with reference to Fig. 3.

In a further embodiment, which is shown in Fig. 2, the matte box 10 is further provided with vertical shade blades 30, 31, positioned in the left and right part of the matte box 10, the largest dimension of the vertical shade blades being substantially parallel to the vertical axis of symmetry 6. These vertical shade blades 30, 31 have the same objective as the horizontal shade blades 15, 18, i.e. screening off a certain part of the camera lens front surface from stray light. Of course, in order to properly work, the form of the vertical shade blades 30, 31 must match the opening formed between the horizontal shade blades 15, 18 and the shell 11 in the vertical direction in each possible position of the horizontal shade blades 15, 18.

This may be implemented using curtain-like vertical shade blades 30, 31, which may be made of light-tight stretchable material or light-tight material in bellows form. The vertical shade blades 30, 31 are at one side pivotally attached to the inside of the shell 11 in the plane formed by the pivot axes 16, 19 of the horizontal shade blades 15, 18. The other side of the vertical shade blades 30, 31 may e.g. be stiffened by respective rods 34, 35 which are slidably attached to respective rails 32, 33 provided at the front side of the horizontal shade blades 15, 18, as shown in Fig. 2. The rods 34, 35 may be provided with clamps to secure their position in the rails 32, 33.

As in the embodiment shown with reference to Fig. 1, the embodiment with vertical shade blades may be provided with a mechanical or electronically controlled vertical shade blade coupling, such that the left and right vertical shade blades 30, 31 are moving symmetrically in opposite directions.

The vertical shade blade coupling may be used in synchronicity with the horizontal shade blade coupling. When zooming the camera lens, this will assure that the same relative positions of the horizontal and vertical shade blades 15, 18, 30, 31, and thus the same effective shading of stray light, are maintained.

It is possible with modem camera's to change the aspect ratio of the image formed by the camera, e.g. from 4:3 to 16:9 or other formats. The vertical shade blade coupling may be used in conjunction with the horizontal shade blade coupling to change to a certain aspect ratio.

The shell 11 of the camera lens shading device 10 may be equipped with light mounting means 22 on top of the shell 11 and near to the upper edge of the shell 11. The light mounting means 22 may be formed by a standard mounting means as generally used in video or still cameras. By positioning the light mounting means 22 near the edge of the shell 11, the light source is mounted as near as possible to the subject to be illuminated by the light source, which is more effective than other mounting positions of the light source on the camera. Also, by using the camera lens shading device 10 according to the present invention, it is possible to mount a light source without the light source being blocked by external shade elements.

In Fig. 3, a schematic diagram is shown of an embodiment of an electronic controller 40 implementing the vertical/horizontal shade blade coupling. The electronic controller 40 comprises a first drive unit 42 for driving the horizontal shade blades 15, 18 (see Fig. 1), e.g. by using an electric motor coupled to the upper and lower axis 16, 19. Furthermore, the electronic controller 40 comprises a second drive unit 44 for driving the vertical shade blades 30, 31 (see Fig. 2), e.g. by using an electric motor and a coupling to the respective rods 33, 34 of the vertical shade blades 30, 31. The first drive unit 42 and second drive unit 44 receive a first and second drive signal from a first and second processing means 41, 43, respectively.

The first processing means 41 may be arranged to ascertain a coupling between the upper and lower horizontal shade blades 15, 18 as discussed above. This also applies to the second processing means 43 with respect to the vertical shade blades 30, 31. The first and second processing means 41, 43 may be connected to each other, such that both can act in a master/slave fashion. This allows, e.g., that a relative position of all shade blades is maintained while zooming and that a maximum of the camera lens front surface is protected from stray light. Alternatively, a certain aspect ratio may be selected in the master processing means 41, 43, resulting in the correct setting of the shade blades controlled by the slave processing means 41, 43.

Preferably, the first and second processing means 41, 43 receive a signal from the camera or camera lens, indicated by a box with reference numeral 45 in Fig. 3. This signal may represent a certain zoom setting (or zoom change), or a selected aspect ratio of the image formed by the camera or camera lens 45.

## Claims

1. Camera lens shading device (10) comprising a shell (11), the shell (11) having mounting means (21) for mounting the shell (11) on a camera, the shell (11) having a substantially concave inner surface with an opening (12) for passing light to a camera lens, and a first axis of symmetry (5),
**characterised in that** the shell (11) further comprises at least a first shade element (15) positioned at the inside of the shell, of which a first edge (16) is pivotally mounted next to the opening (12), the first edge being substantially parallel to the first axis of symmetry.

2. Camera lens shading device according to claim 1, in which the shading device (10) further comprises a second shade element (18) positioned at the inside of the shell (11), having substantially identical dimensions as the first shade element (15), a first edge (19) of the second shade element (18) being mounted next to the opening (12) opposite to the first shade element (15).

3. Camera lens shading device according to claim 1 or 2, in which the shading device (10) further comprises first coupling means (41, 42) for coupling the movement of the first and second shade element (15, 18) in an opposite direction.

4. Camera lens shading device according to claim 3, in which the first coupling means (41, 42) are arranged to receive zoom or aspect ratio information and to control the relative position of the first and second shade element (15, 18) in dependence of the zoom or aspect ratio information.

5. Camera lens shading device according to one of the proceeding claims, in which the shading device (10) has a second axis of symmetry (6), substantially perpendicular to the first axis of symmetry (5), the shading device (10) further comprising at least one third shade element (30; 31), being mounted at the inside of the shell (11) next to the opening (12), substantially parallel to the second axis of symmetry.

6. Camera lens shading device according to claim 5, in which the shading device (10) further comprises second coupling means (43, 44) for coupling the movement of the at least one third shade element (30; 31) in an opposite direction.

7. Camera lens shading device according to claim 6, in which the second coupling means (43, 44) are arranged to receive zoom or aspect ratio information and to control the relative position of at least one third shade element in dependence of the zoom or aspect ratio information.

8. Camera lens shading device according to claim 7, in which the shading device (10) further comprises third coupling means (41, 43) for establishing a coupling between the first and second coupling means.

9. Camera lens shading device according to one of the proceeding claims, in which the shading device (10) further comprises light mounting means (22) at an outside edge of the shell (10).

10. Camera lens shading device according to one of the proceeding claims, in which the shading device (10) further comprises at least one tray (27, 28) for holding a filter or mask (25, 26).

## Patentansprüche

1. Gegenlichtblende (10) für eine Kamera, aufweisend eine Umhüllung (11), wobei die Umhüllung (11) eine Befestigungseinrichtung (21) zum Befestigen der Umhüllung (11) an einer Kamera besitzt, wobei die Umhüllung (11) eine im Wesentlichen konkave, innere Oberfläche mit einer Öffnung (12) zum Hindurchlassen von Licht zu einem Kameraobjektiv besitzt, und eine erste Symmetrieachse (5), **gekennzeichnet dadurch, dass** die Umhüllung (11) weiterhin mindestens ein erstes Blendenelement (15), positioniert an der Innenseite der Umhüllung, aufweist, dessen erste Kante (16) schwenkbar am nächsten zu der Öffnung (12) befestigt ist, wobei die erste Kante im Wesentlichen parallel zu der ersten Symmetrieachse liegt.

2. Gegenlichtblende für eine Kamera nach Anspruch 1, wobei die Blendeneinrichtung (10) weiterhin ein zweites Blendenelement (18), positioniert an der Innenseite der Umhüllung (11), aufweist, mit im Wesentlichen identischen Dimensionen wie das erste Blendenelement (15), wobei eine erste Kante (19) des zweiten Blendenelements (18) am nächsten zu der Öffnung (12) gegenüberliegend des ersten Blendenelements (15) befestigt ist.

3. Gegenlichtblende für eine Kamera nach Anspruch 1 oder 2, wobei die Blendeneinrichtung (10) weiterhin erste Kopplungseinrichtungen (41, 42) zum Koppeln der Bewegung des ersten und des zweiten Blendenelements (15, 18) in einer entgegengesetzten Richtung aufweist.

4. Gegenlichtblende für eine Kamera nach Anspruch 3, wobei die ersten Kopplungseinrichtungen (41, 42) so angeordnet sind, um Zoom- oder Aspekt-Verhältnis-Informationen aufzunehmen und die relative Position des ersten und des zweiten Blendenelements (15, 18) in Abhängigkeit der Zoom- oder Aspekt-Verhältnis-Informationen zu kontrollieren.

5. Gegenlichtblende für eine Kamera nach einem der vorhergehenden Ansprüche, wobei die Blendeneinrichtung (10) eine zweite Symmetrieachse (6), im Wesentlichen senkrecht zu der ersten Symmetrieachse (5), umfasst, wobei die Blendeneinrichtung (10) weiterhin mindestens ein drittes Blendenelement (30; 31) aufweist, das an der Innenseite der Umhüllung (11), am nächsten zu der Öffnung (12), im Wesentlichen parallel zu der zweiten Symmetrieachse, befestigt ist.

6. Gegenlichtblende für eine Kamera nach Anspruch 5, wobei die Blendeneinrichtung (10) weiterhin zweite Kopplungseinrichtungen (43, 44) zum Koppeln der Bewegung des mindestens einen dritten Blendenelements (30; 31) in einer entgegengesetzten Richtung aufweist.

7. Gegenlichtblende für eine Kamera nach Anspruch 6, wobei die zweiten Kopplungseinrichtungen (43, 44) so angeordnet sind, um Zoom- oder Aspekt-Verhältnis-Informationen aufzunehmen und um die relative Position mindestens eines dritten Blendenelements in Abhängigkeit der Zoom- oder Aspekt-Verhältnis-Informationen zu kontrollieren.

8. Gegenlichtblende für eine Kamera nach Anspruch 7, wobei die Blendeneinrichtung (10) weiterhin dritte Kopplungseinrichtungen (41, 43) zum Bilden einer Kopplung zwischen der ersten und der zweiten Kopplungseinrichtung aufweist.

9. Gegenlichtblende für eine Kamera nach einem der vorhergehenden Ansprüche, wobei die Blendeneinrichtung (10) weiterhin eine Lichtbefestigungseinrichtung (22) an einer Außenseitenkante der Umhüllung (11) aufweist.

10. Gegenlichtblende für eine Kamera nach einem der vorhergehenden Ansprüche, wobei die Blendeneinrichtung (10) weiterhin mindestens ein Fach (27, 28) zum Halten eines Filters oder einer Maske (25, 26) aufweist.

## Revendications

1. Dispositif pare-soleil (10) pour lentille d'appareil de prise de vues, comprenant une coque (11), la coque (11) comportant des moyens de montage (21) permettant de monter la coque (11) sur un appareil de prise de vues, la coque (11) présentant une surface intérieure sensiblement concave ayant une ouverture (12) pour le passage de la lumière vers une lentille de l'appareil de prise de vues, et un premier axe de symétrie (5),
**caractérisé en ce que** la coque (11) comprend, en outre, au moins un premier élément pare-soleil (15) placé à l'intérieur de la coque, dont un premier bord (16) est monté à pivotement à proximité de l'ouverture (12), le premier bord étant sensiblement parallèle au premier axe de symétrie.

2. Dispositif pare-soleil pour lentille d'appareil de prise de vues selon la revendication 1, dans lequel le dispositif pare-soleil (10) comprend, en outre, un deuxième élément pare-soleil (18) placé à l'intérieur de la coque (11) et ayant des dimensions sensiblement identiques à celles du premier élément pare-soleil (15), un premier bord (19) du deuxième élément pare-soleil (18) étant monté à proximité de l'ouverture (12), à l'opposé du premier élément pare-soleil (15).

3. Dispositif pare-soleil pour lentille d'appareil de prise de vues selon la revendication 1 ou 2, dans lequel le dispositif pare-soleil (10) comprend, en outre, des premiers moyens de couplage (41, 42) destinés à coupler les déplacements des premier et deuxième éléments pare-soleil (15, 18) dans des sens opposés.

4. Dispositif pare-soleil pour lentille d'appareil de prise de vues selon la revendication 3, dans lequel les premiers moyens de couplage (41, 42) sont conçus pour recevoir des informations de zoom ou de format d'image et pour commander la position relative des premier et deuxième éléments pare-soleil (15, 18) en fonction des informations de zoom ou de format d'image.

5. Dispositif pare-soleil pour lentille d'appareil de prise de vues selon l'une des revendications précédentes, dans lequel le dispositif pare-soleil (10) présente un deuxième axe de symétrie (6), sensiblement perpendiculaire au premier axe de symétrie (5), le dispositif pare-soleil (10) comprenant, en outre, au moins un troisième élément pare-soleil (30, 31), qui est monté à l'intérieur de la coque (11) à proximité de l'ouverture (12), dans une position sensiblement parallèle au deuxième axe de symétrie.

6. Dispositif pare-soleil pour lentille d'appareil de prise de vues selon la revendication 5, dans lequel le dispositif pare-soleil (10) comprend, en outre, des deuxièmes moyens de couplage (43, 44) destinés à coupler le déplacement du ou des troisième(s) élément(s) pare-soleil (30; 31) dans un sens opposé.

7. Dispositif pare-soleil pour lentille d'appareil de prise de vues selon la revendication 6, dans lequel les deuxièmes moyens de couplage (43, 44) sont conçus pour recevoir des informations de zoom ou de format d'image et pour commander la position relative du ou des troisième(s) élément(s) pare-soleil en fonction des informations de zoom ou de format d'image.

8. Dispositif pare-soleil pour lentille d'appareil de prise de vues selon la revendication 7, dans lequel le dispositif pare-soleil (10) comprend, en outre, des troisièmes moyens de couplage (41, 43) destinés à établir un couplage entre les premiers et deuxièmes moyens de couplage.

9. Dispositif pare-soleil pour lentille d'appareil de prise de vues selon l'une des revendications précédentes, dans lequel le dispositif pare-soleil (10) comprend, en outre, des moyens de montage de lampe (22) sur un bord extérieur de la coque (10).

10. Dispositif pare-soleil pour lentille d'appareil de prise de vues selon l'une des revendications précédentes, dans lequel le dispositif pare-soleil (10) comprend, en outre, au moins un châssis (27, 28) destiné à maintenir un filtre ou un masque (25, 26).
